# DEMANDE DE BREVET EUROPEEN

(11) **EP 1 555 836 A1**
(43) Date de publication de la demande: **20.07.2005**
(21) Numéro de dépôt: 04290115.7
(22) Date de dépôt: 15.01.2004
(51) Int. Cl.: H04Q 7/22, H04L 12/58

(54) **Systémé de routage de trafic de messages multimédia (MMS) inter-operateurs**

(71) Demandeur: FRANCE TELECOM, 75015 Paris (FR)
(72) Inventeur: Chichmanian, Anouch, 92130 Issy-les-Moulineaux (FR); Schott, Anne-Jeanne, 75011 Paris (FR)
(74) Mandataire: Grynwald, Albert

(57) **Abrégé**

Système de routage de trafic MMS inter-opérateurs entrant, provenant d'une pluralité d'opérateurs émetteurs et dirigé vers un opérateur destinataire (A) disposant d'au moins un centre de messagerie MMS (MMSC_A) et d'un serveur de noms de domaine (DNS_A), ledit opérateur destinataire (A) étant client d'un relais MMS apte à router vers lesdits opérateurs émetteurs le trafic MMS sortant dudit opérateur destinataire (A).

Selon l'invention, ledit serveur de noms de domaine (DNS_A) de l'opérateur destinataire (A) est apte à fournir, sur requête :
- une adresse IP du centre de messagerie MMS (MMSC_A) de l'opérateur destinataire (A), si la requête provient dudit relais MMS ou d'un opérateur émetteur en situation de lien direct avec l'opérateur destinataire (A),
- une adresse IP du relais MMS, si la requête provient de tout autre opérateur.

Application au routage de trafics MMS inter-opérateurs.

## Description

La présente invention concerne un système de routage de trafic MMS inter-opérateurs entrant.

Les opérateurs de téléphonie mobile ont récemment introduit le service de messagerie multimédia MMS (Multimedia Messaging Service) dans leur offre commerciale. D'abord limitée aux échanges intra-opérateur, l'offre MMS s'élargit peu à peu aux échanges inter-opérateurs.

Selon une première approche du trafic MMS inter-opérateurs, les messages MMS sont échangés directement entre les centres de messagerie multimédia (MMSC) des opérateurs émetteurs et destinataires. La mise en oeuvre de ces échanges MMS entre opérateurs fait l'objet de recommandations établies par l'instance de normalisation 3GPP et de la GSM Association (GSMA).

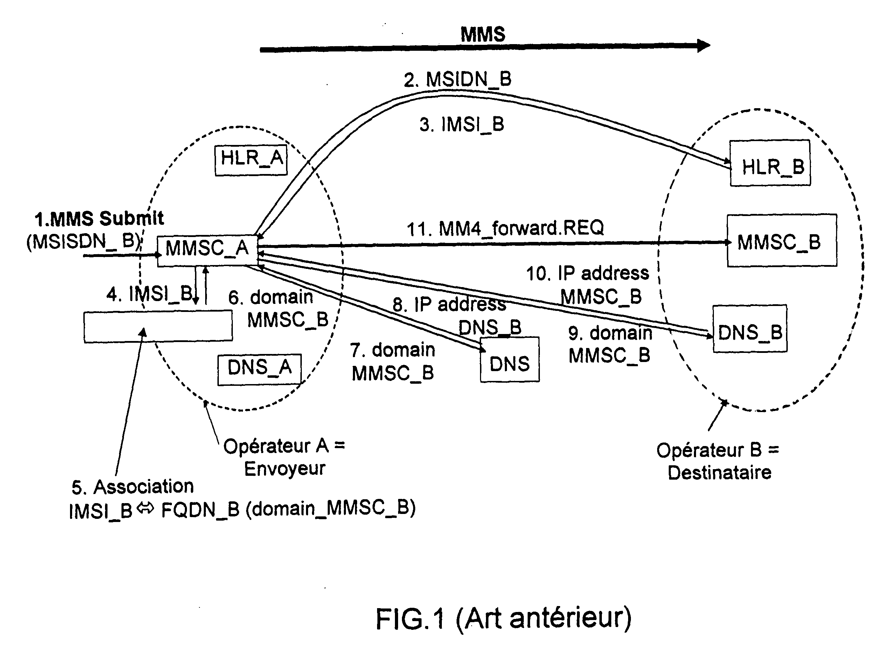

La figure 1 est un schéma du routage d'un trafic MMS entre deux opérateurs dans le cas de cette approche par échange direct inter-opérateurs.

Comme le montre la figure 1, lorsqu'un abonné d'un opérateur mobile A souhaite envoyer un message MMS à un abonné d'un autre opérateur mobile B, il envoie le MMS au centre de messagerie multimédia MMSC_A de son opérateur de souscription. Le centre MMSC_A recevant cette demande d'envoi doit:
- déterminer si le destinataire est un abonné de son propre réseau, en tenant compte notamment de la portabilité des numéros mobiles (MNP),
- dans la négative, déterminer le centre MMSC_B de l'opérateur destinataire B,
- transférer le MMS au MMSC_B destinataire.

Le centre MMSC_B du destinataire est alors chargé de délivrer le MMS au destinataire. L'interface inter-MMSC a été spécifiée par l'instance de normalisation 3GPP (« Multimedia Messaging Service (MMS) - Functional Description », 3GPP TS 23 .140 V5.4.0 (2002-09)), et référencée comme interface "MM4" dans la nomenclature MMS.

Plus spécialement, l'instance de normalisation 3GPP a également spécifié un mécanisme de détermination du MMSC destinataire, supportant la portabilité du numéro mobile (MNP). Ce mécanisme peut être décrit de la manière suivante en référence à la figure 1:

Le centre MMSC_A de l'émetteur A construit et envoie une requête MAP SRI_for_SM (« Mobile Application Part (MAP) specifications », 3GPP TS 29.002 V3.14.0 (2002-09)) vers le registre HLR_B (Home Location Register) de l'opérateur destinataire B pour récupérer l'IMSI (International Mobile Subscriber Register), non portable, de l'abonné destinataire à partir de son numéro MSISDN (Mobile Station ISDN Number).

Le centre MMSC_A de l'émetteur A associe l'IMSI au Fully Qualified Domain Name (FQDN) du destinataire B, grâce à une table d'association. D'une manière générale un FQDN de destinataire consiste en: "MSISDN/TYPE=PLMN@domain_destinataire",

Pour résoudre « domain_destinataire », le centre MMSC_A de l'émetteur A construit et envoie une première requête DNS (Domain Name Server) vers un serveur DNS géré par son réseau GRX, puis une deuxième requête vers un serveur DNS_B du destinataire B, dont il aura obtenu l'adresse IP auprès du serveur DNS, et retrouver l'adresse IP du centre MMSC_B de l'opérateur destinataire B.

Une fois l'adresse IP de MMSC_B déterminée, le centre MMSC_A de l'émetteur crée une session SMTP (Simple Mail Transfer Protocol) vers le centre MMSC_B du destinataire, pour envoyer le message MM4 contenant le MMS (message MM4_forward.REQ). L'association GSMA a recommandé que le réseau d'interconnexion GRX actuellement utilisé pour le transport du trafic GPRS inter-opérateurs soit utilisé également pour le transport du trafic MMS inter-opérateurs (interface MM4).

On remarquera que, dans la solution proposée en regard de la figure 1, les opérateurs mobiles sont en charge de la détermination du centre MMSC destinataire et du routage du MMS vers le destinataire. Cette solution est basée sur une table d'association entre IMSI et FQDN. Un opérateur qui aurait un grand nombre de partenaires MMS, c'est-à-dire un grand nombre d'opérateurs avec lesquels il accepte d'échanger des MMS, devrait gérer et tenir à jour une table d'association très importante. Ceci peut être lourd pour les opérateurs mobiles.

Par ailleurs, chaque envoi de MMS nécessite une requête MAP SRI_for_SM. Avec l'augmentation du trafic MMS inter-opérateurs, le trafic MAP sera d'autant augmenté. Ceci peut avoir un impact important pour les opérateurs mobiles.

C'est pourquoi certains fournisseurs de réseau d'interconnections GPRS (GRX) offrent ou envisagent d'offrir également un nouveau service d'interconnexion de MMS faisant intervenir un relais MMS (appelé aussi par la suite MMS Relay ou MMS-eX).

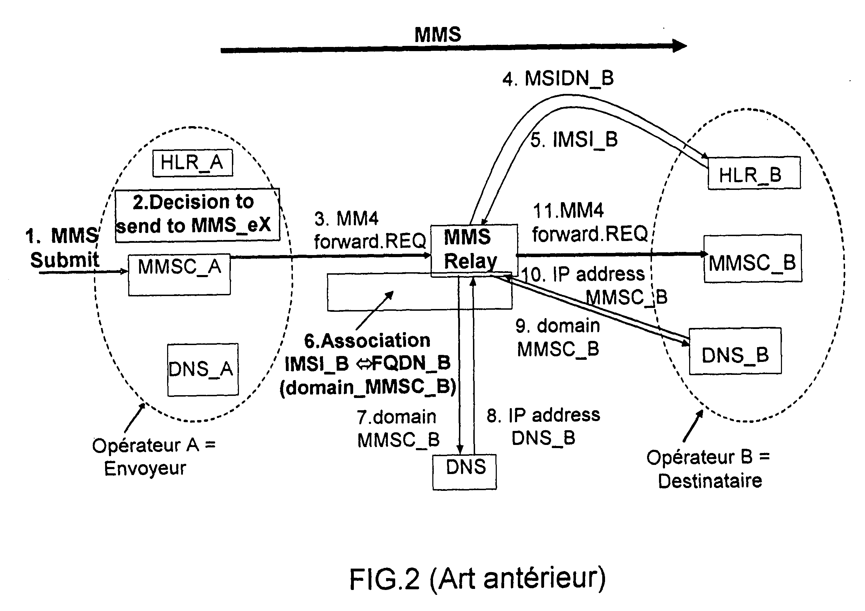

Ce service a pour but de simplifier le traitement et le routage des MMS inter-opérateurs. En effet, comme l'illustre la figure 2, les opérateurs mobiles émetteurs peuvent envoyer les demandes d'envoi de MMS inter-opérateurs au relais MMS, lequel prendra en charge la détermination du centre MMSC destinataire ainsi que le routage SMTP vers le centre MMSC destinataire.

L'opérateur, ici l'opérateur A, qui souscrit à un service de relais MMS, configure son centre MMSC (MMSC_A) pour envoyer le trafic MM4 vers le relais MMS. Il route donc son trafic sortant vers le relais MMS.

Ainsi, tout opérateur client du service de relais MMS enverra son trafic MM4 via le relais MMS. De facto, un opérateur qui a souscrit au service du relais MMS recevra le trafic MM4 via le relais MMS, seulement s'il a été envoyé par un autre client du même relais MMS. Par contre, un opérateur qui n'est pas client du service de relais MMS enverra le trafic MM4 directement à l'opérateur mobile destinataire.

Cependant, compte tenu que le trafic MMS inter-opérateurs ne cesse de croître, il peut être intéressant pour les opérateurs de téléphonie mobile d'avoir également un point d'entrée unique pour le trafic MMS entrant, ce qui, couplé au relais MMS du trafic sortant, leur permettrait de n'avoir à maintenir qu'un seul lien pour les flux MMS dans les deux sens.

Aujourd'hui, les spécifications du 3GPP et de la GSM Association ne décrivent pas de solution pour offrir ce service de concentration de trafic entrant.

Aussi, le problème technique à résoudre par l'objet de la présente invention est de proposer un système de routage de trafic MMS inter-opérateurs entrant, provenant d'une pluralité d'opérateurs émetteurs et dirigé vers un opérateur destinataire disposant d'au moins un centre de messagerie MMS et d'un serveur de noms de domaine, ledit opérateur destinataire étant client d'un relais MMS , système qui permettrait à un fournisseur de relais MMS d'offrir à ses clients opérateurs mobiles un service de concentration du trafic MMS entrant inter-opérateurs, et ceci pour le trafic émis par n'importe quel opérateur. De cette manière, le fournisseur de relais MMS pourra effectuer, à la place de l'opérateur destinataire, un certain nombre de traitements, comme des filtrages, des modifications de formats, l'interfaçage avec de nouveaux opérateurs, etc.

La solution au problème technique posé consiste, selon la présente invention, en ce que ledit serveur de noms de domaine de l'opérateur destinataire est apte à fournir, sur requête ;
- la ou les adresses IP du centre de messagerie MMS de l'opérateur destinataire, si la requête provient dudit relais MMS ou d'un opérateur émetteur en situation de lien direct avec l'opérateur destinataire,
- la ou les adresses IP du relais MMS, si la requête provient de tout autre opérateur.

Ainsi, comme on le verra en détail plus loin, le système de routage conforme à l'invention permet de forcer le routage de tout le trafic MMS inter-opérateurs entrant à destination d'un opérateur client d'un relais MMS à transiter via ledit relais MMS, que les opérateurs émetteurs soient ou non clients du même relais MMS.

L'opérateur mobile qui aura souscrit au service d'un relais MMS pourra conserver une interface unique vers le relais MMS, à la fois pour son trafic entrant et son trafic sortant.

Néanmoins, le système de routage selon l'invention offre également à l'opérateur destinataire la possibilité de conserver un lien direct avec les opérateurs émetteurs de son choix et à continuer à recevoir de leur part le trafic entrant, directement sans passer par le relais MMS.

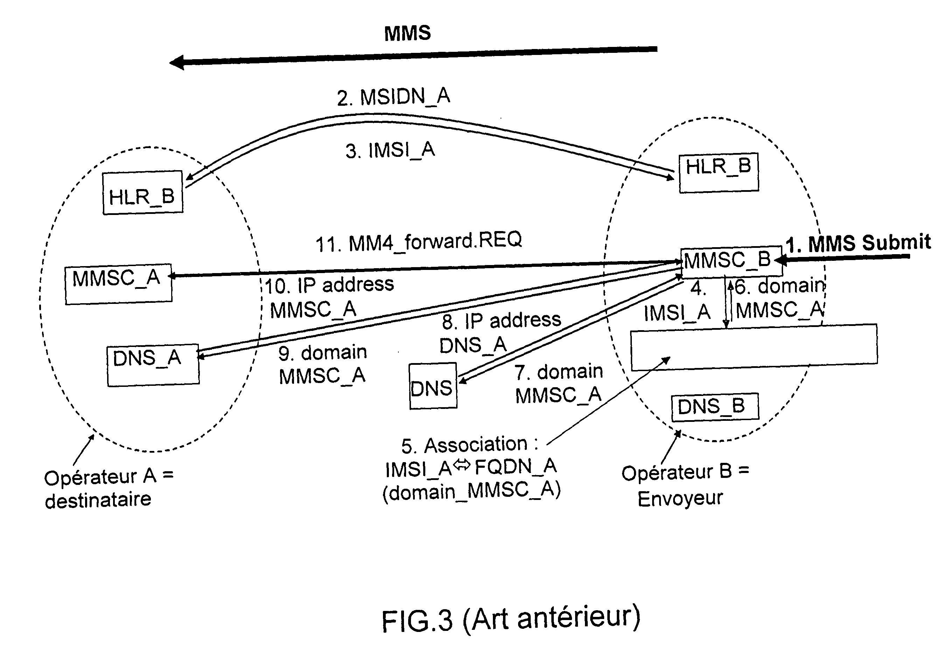

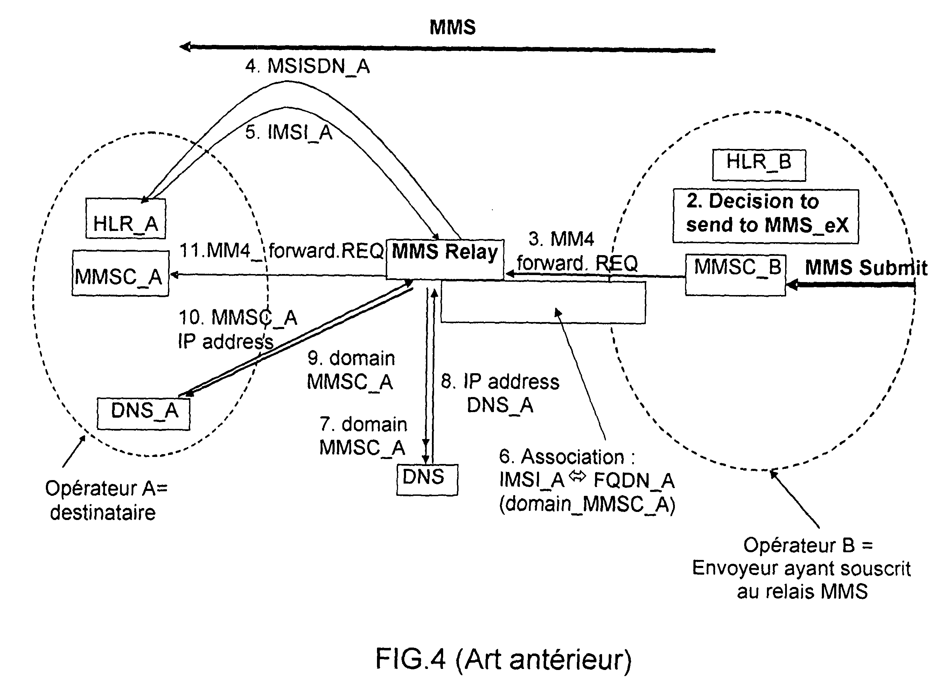

On peut résumer les systèmes actuels de routage de trafic MMS inter-opérateurs entrant de la manière suivante, en référence aux figures 3 et 4.

Dans le cas où l'opérateur émetteur B n'est pas un client du relais MMS de l'opérateur destinataire A, pour résoudre "domain_destinataire", le serveur DNS_B de l'émetteur B envoie une requête DNS à un serveur DNS généralement géré par son opérateur GRX (GRX-DNS), lequel redirige la requête vers le serveur DNS_A du destinataire A, celui-ci résout alors "domain_destinataire" en fournissant l'adresse IP du centre MMSC_A. Ce mécanisme est illustré sur la figure 3.

Dans le cas où l'opérateur émetteur B est un client du relais MMS de l'opérateur destinataire A, pour résoudre "domain_destinataire", le relais MMS envoie la requête DNS au serveur GRX-DNS, celui-ci redirige la requête vers le serveur DNS_A du destinataire A. Ce dernier résout alors "domain_destinataire" en fournissant l'adresse IP du centre MMSC_A. Ce mécanisme est illustré sur la figure 4.

On observera que dans tous les cas, le serveur DNS de l'opérateur destinataire est consulté pour résoudre "domain_destinataire". Dans les solutions actuelles, le serveur DNS destinataire fournit l'adresse IP de son MMSC. On comprend alors que si, comme le propose l'invention, le serveur DNS du destinataire résout "domain_destinataire" en fournissant l'adresse du relais MMS dont il est client et non celle de son propre centre MMSC, tous les trafics entrants seront dirigés vers le relais MMS du destinataire, conformément au résultat recherché. Il n'empêche que, s'il le désire, le destinataire pourra décider de recevoir directement le trafic MMS d'opérateurs qu'il aura choisi. Dans ce cas, le serveur DNS destinataire résoudra «domain_destinataire" en retournant l'adresse IP du centre MMSC destinataire.

Le serveur DNS du destinataire retournera également l'adresse IP du centre MMSC destinataire lorsque la requête "domain_destinataire" provient du relais MMS lui-même. Bien entendu, le relais MMS peut éviter d'émettre une telle requête si, comme le prévoit aussi l'invention, le relais MMS dispose d'une table de correspondance entre les noms de domaine de ses clients et une adresse IP de leur centre de messagerie MMS.

La description qui va suivre en regard des dessins annexés, donnés à titre d'exemples non limitatifs, fera bien comprendre en quoi consiste l'invention et comment elle peut être réalisée.

La figure 5 est un schéma d'un système de routage conforme à l'invention dans le cas où l'opérateur émetteur n'est pas client du relais MMS de l'opérateur destinataire.

La figure 6 est une session détaillée de l'étape 13 du schéma de la figure 5.

La figure 7 est un schéma du système de routage conforme à l'invention dans le cas où l'opérateur émetteur est client du relais MMS de l'opérateur destinataire.

La figure 8 est une session détaillée de l'étape 3 du schéma de la figure 7.

Le système de routage d'un trafic MMS inter-opérateurs, objet de l'invention, va être maintenant décrit dans le cas où l'opérateur destinataire, désigné par A, est client d'un service de relais MMS et souhaite recevoir la totalité du trafic entrant via le relais MMS, à l'exclusion de tout lien direct avec certains opérateurs émetteurs.

### Cas où l'opérateur émetteur B n'est pas client du relais MMS du destinataire A

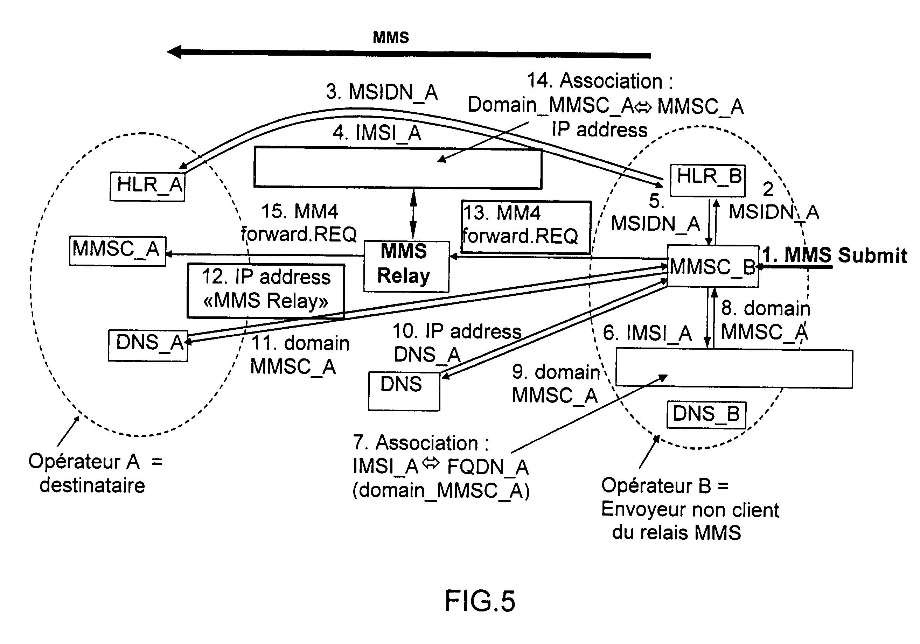

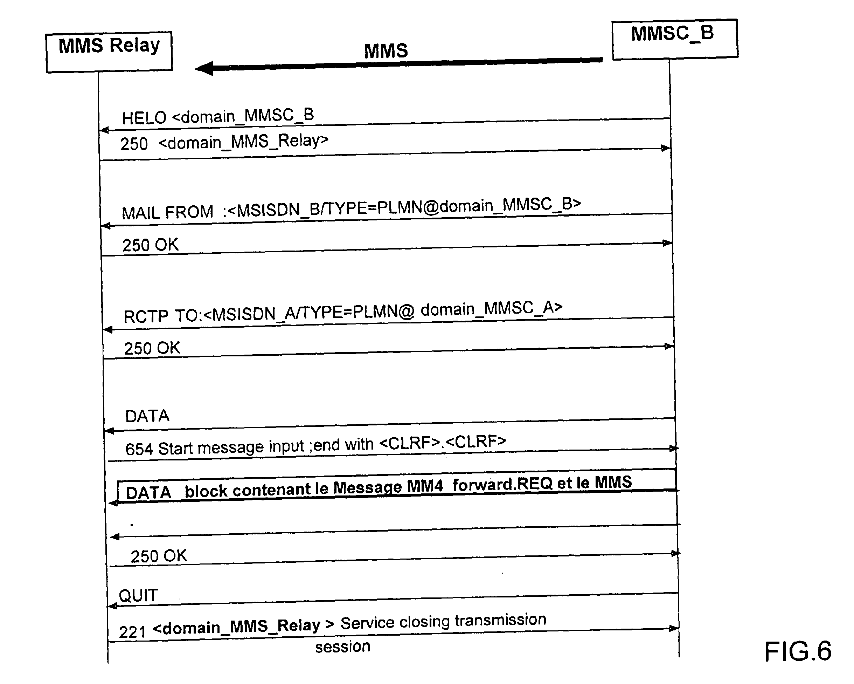

Ce cas est illustré sur la figure 5 et est à comparer avec le schéma de la figure 3. Les modifications sont les suivantes :
Etape 12 : le serveur DNS_A de l'opérateur destinataire A résout son nom de domaine ("domain_MMSC_A" sur la figure 5) et fournit l'adresse IP du relais MMS.
Etape 13 : le centre MMSC_B de l'opérateur émetteur B crée une session SMTP vers le relais MMS pour transmettre le message MM4. Cette session est détaillée sur la figure 6.
Etape 14 : le relais MMS associe le domaine du destinataire A reçu dans le champ "SMTP RTCP TO:" de l'étape 13, à l'adresse IP du centre MMSC_A du destinataire A stockée localement dans une table de correspondance entre les noms de domaine de ses clients et une adresse IP de leur centre de messagerie MMS (MMSC).

### Cas où l'opérateur émetteur B est client du relais MMS du destinataire A

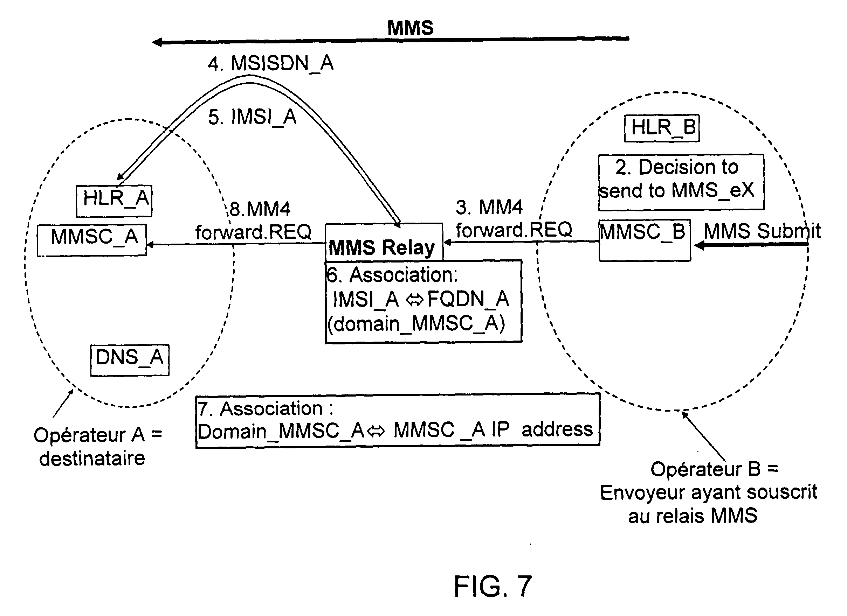

Ce cas est illustré sur la figure 7 et est à comparer avec le schéma de la figure 4. Les modifications sont les suivantes :
Etape 7 : le relais MMS associe le domaine du destinataire A fourni par le FQDN, à l'adresse IP du MMSC_A destinataire.

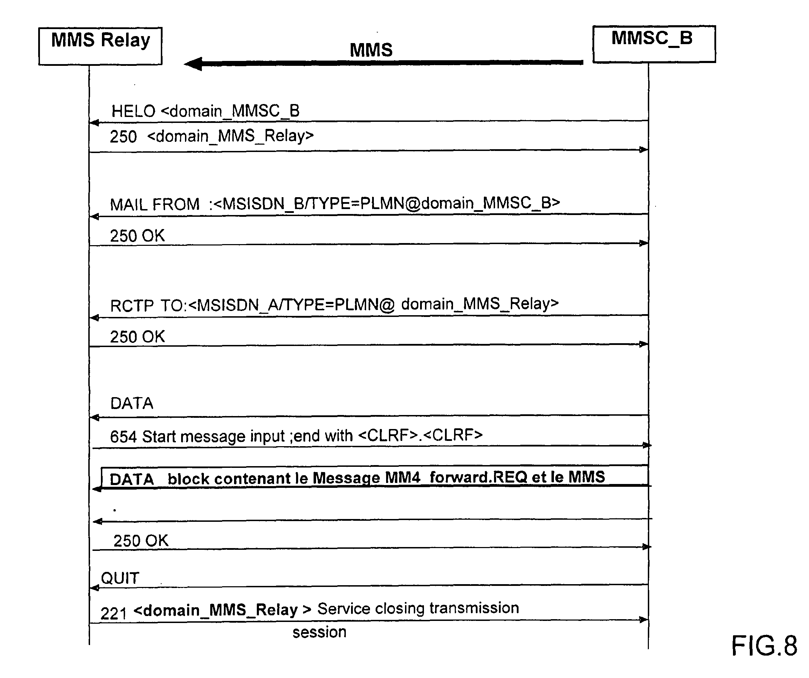

La session de l'étape 3 est détaillée sur la figure 8.

Dans les deux cas qui viennent d'être décrits, le relais MMS fait usage d'une table de correspondance entre les noms de domaine de ses clients et la ou les adresses IP de leur centre de messagerie MMS (MMSC). Bien qu'elle facilite grandement la gestion des trafics par le relais MMS, l'utilisation d'une telle table n'est pas indispensable. En effet, le relais MMS peut pour résoudre « domain_destinataire » mettre en oeuvre le même mécanisme que celui montré sur la figure 4 qui passe par une requête DNS auprès du serveur DNS_A qui retournera alors au relais MMS l'adresse IP du centre MMSC_A.

En d'autres termes, s'il utilise une table de correspondance, le relais MMS met en oeuvre le mécanisme suivant :
- lorsque le relais MMS reçoit une requête SMTP destinée à: "MSISDN/TYPE=PLMN@domainMMS_Relay", où « domainMMS_Relay » est un nom de domaine correspondant au relais MMS, ledit relais MMS construit une requête MAP vers le HLR du destinataire pour récupérer l'IMSI, l'associer au FQDN et récupérer le nom de domaine du destinataire, ce dernier étant destiné à retrouver l'adresse du MMSC de l'opérateur destinataire en utilisant ladite table de correspondance,
- lorsque le relais reçoit une requête SMTP destinée à: "MSISDN/TYPE=PLMN@domain_destinataire", où «domain_destinataire» est un nom de domaine correspondant à un opérateur mobile, ledit relais MMS récupère directement l'adresse du MMSC de l'opérateur destinataire en utilisant ladite table de correspondance.

Par contre, en l'absence de table de correspondance, le relais MMS met en oeuvre le mécanisme suivant :
- lorsque le relais MMS reçoit une requête SMTP destinée à: "MSISDN/TYPE=PLMN@domainMMS_Relay", où « domainMMS_Relay » est un nom de domaine correspondant au relais MMS, ledit relais MMS construit une requête MAP vers le HLR du destinataire pour récupérer l'IMSI, l'associer au FQDN et récupérer le nom de domaine du destinataire, ce dernier étant destiné à retrouver l'adresse du MMSC de l'opérateur destinataire en utilisant une requête DNS,
- lorsque le relais reçoit une requête SMTP destinée à: "MSISDN/TYPE=PLMN@domain_destinataire", où « domain_destinataire » est un nom de domaine correspondant à un opérateur mobile, ledit relais MMS récupère directement l'adresse du MMSC de l'opérateur destinataire en utilisant une requête DNS.

On envisage maintenant le cas où l'opérateur destinataire A ayant souscrit au service du relais MMS souhaite continuer à recevoir du trafic MMS entrant directement de certains opérateurs, tout le reste du trafic entrant transitant via le relais MMS.

On considère ci-dessous le cas où le destinataire A est un client du relais MMS mais souhaite également pouvoir recevoir le trafic directement de l'émetteur B.

### Cas où l'émetteur B n'est pas un client du relais MMS

L'émetteur B détermine le centre MMSC_A du destinataire A comme indiqué sur la figure 5. Il recevra donc (étape 14) l'adresse IP du relais MMS. Mais ceci n'est pas compatible avec le fait que le destinataire A souhaite recevoir directement le trafic provenant de cet émetteur B.

Le serveur DNS_A du destinataire A, qui est l'opérateur ayant souscrit au service du relais MMS, doit donc être capable de résoudre dynamiquement et différemment "domain_destinataire" en fonction de l'origine de la requête DNS :
Si la requête DNS émane d'un opérateur pour lequel le destinataire A souhaite recevoir le trafic directement, le serveur DNS_A doit fournir l'adresse IP de son centre MMSC, à savoir MMSC_A,
Si la requête DNS émane d'un opérateur pour lequel le destinataire souhaite recevoir le trafic via le relais MMS, le serveur DNS_A doit fournir l'adresse IP du relais MMS.

La distinction par le serveur DNS_A entre les différents opérate urs émetteurs B peut être effectuée en tenant compte de l'adresse IP de l'émetteur de la requête DNS.

### Cas où l'émetteur B est un client du relais MMS

Ce cas correspond à un échange de MMS entre deux clients d'un même relais MMS. Ces clients souhaitent néanmoins échanger du trafic MMS directement, sans passer par le relais MMS.

Comme indiqué ci-dessus, l'émetteur B client du relais MMS implémente un mécanisme de décision d'envoi au relais MMS, afin de déterminer si le trafic MMS doit être envoyé au relais ou non.

Donc, deux clients du relais MMS qui souhaitent échanger du trafic MMS directement doivent introduire ce critère dans leur mécanisme de décision d'envoi au relais MMS.

Une fois la décision de router le trafic directement vers le destinataire, la procédure se déroule comme représenté sur la figure 3.

## Revendications

1. Système de routage de trafic MMS inter-opérateurs entrant, provenant d'une pluralité d'opérateurs émetteurs et dirigé vers un opérateur destinataire (A) disposant d'au moins un centre de messagerie MMS (MMSC_A) et d'un serveur de noms de domaine (DNS_A), ledit opérateur destinataire (A) étant client d'un relais MMS , **caractérisé en ce que** ledit serveur de noms de domaine (DNS_A) de l'opérateur destinataire (A) est apte à fournir, s ur requête :
- la ou les adresse s IP du centre de messagerie MMS (MMSC_A) de l'opérateur destinataire (A), si la requête provient dudit relais MMS ou d'un opérateur émetteur en situation de lien direct avec l'opérateur destinataire (A),
- la ou les adresse s IP du relais MMS, si la requête provient de tout autre opérateur.

2. Système de routage selon la revendication 1, **caractérisé en ce que** le relais MMS met en oeuvre le mécanisme suivant :
- lorsque le relais MMS reçoit une requête SMTP destinée à: "MSISDN/TYPE=PLMN@domainMMS_Relay", où « domainMMS_Relay » est un nom de domaine correspondant au relais MMS, ledit relais MMS construit une requête MAP vers le HLR du destinataire pour récupérer l'IMSI, l'associer au FQDN et récupérer le nom de domaine du destinataire, ce dernier étant destiné à retrouver l'adresse du MMSC de l'opérateur destinataire en utilisant une requête DNS,
- lorsque le relais reçoit une requête SMTP destinée à: "MSISDN/TYPE=PLMN@domain_destinataire", où « domain_destinataire » est un nom de domaine correspondant à un opérateur mobile, ledit relais MMS récupère directement l'adresse du MMSC de l'opérateur destinataire en utilisant une requête DNS.

3. Système de routage selon la revendication 1, **caractérisé en ce que** le relais MMS dispose d'une table de correspondance entre les noms de domaine de ses clients et une adresse IP de leur centre de messagerie MMS (MMSC).

4. Système de routage selon la revendication 3, **caractérisé en ce que** le relais MMS met en oeuvre le mécanisme suivant :
- lorsque le relais MMS reçoit une requête SMTP destinée à: "MSISDN/TYPE=PLMN@domainMMS_Relay", où « domainMMS_Relay » est un nom de domaine correspondant au relais MMS, ledit relais MMS construit une requête MAP vers le HLR du destinataire pour récupérer l'IMSI, l'associer au FQDN et récupérer le nom de domaine du destinataire, ce dernier étant destiné à retrouver l'adresse du MMSC de l'opérateur destinataire en utilisant ladite table de correspondance,
- lorsque le relais reçoit une requête SMTP destinée à: "MSISDN/TYPE=PLMN@domain_destinataire", où « domain_destinataire » est un nom de domaine correspondant à un opérateur mobile, ledit relais MMS récupère directement l'adresse du MMSC de l'opérateur destinataire en utilisant ladite table de correspondance.

## Revendications modifiées

### Revendications modifiées conformément à la règle 86(2) CBE.

**1.** Système de routage de trafic MMS inter-opérateurs entrant, provenant d'une pluralité d'opérateurs émetteurs et dirigé vers un opérateur destinataire (A) disposant d'au moins un centre de messagerie MMS (MMSC_A) et d'un serveur de noms de domaine (DNS_A), ledit opérateur destinataire (A) étant client d'un relais MMS, **caractérisé en ce que** ledit serveur de noms de domaine (DNS_A) de l'opérateur destinataire (A) est apte à fournir, en réponse à une requête provenant d'un opérateur émetteur (B) pour obtenir l'adresse de son centre de messagerie MMS (MMSC_A), la ou les adresses IP du relais MMS.

**2.** Système selon la revendication 1, dans lequel, sur requête, si ladite requête provient dudit relais MMS, le serveur de noms de domaine (DNS_A) est agencé pour fournir la ou les adresses IP du centre de messagerie MMS (MMSC_A) de l'opérateur destinataire (A).

**3.** Système selon l'une des revendications 1 et 2, dans lequel, sur requête, si ladite requête provient d'un opérateur émetteur en situation de lien direct avec l'opérateur destinataire (A), le serveur de noms de domaine (DNS_A) est agencé pour fournir la ou les adresses IP du centre de messagerie MMS (MMSC_A) de l'opérateur destinataire (A).

**4.** Système de routage selon l'une des revendications 1 à 3, dans lequel le relais MMS met en oeuvre le mécanisme suivant :
- lorsque le relais MMS reçoit une requête SMTP destinée à: "MSISDN/TYPE=PLMN@domainMMS_Relay", où « domainMMS_Relay » est un nom de domaine correspondant au relais MMS, ledit relais MMS construit une requête MAP vers le HLR du destinataire pour récupérer l'IMSI, l'associer au FQDN et récupérer le nom de domaine du destinataire, ce dernier étant destiné à retrouver l'adresse du MMSC de l'opérateur destinataire en utilisant une requête DNS,
- lorsque le relais reçoit une requête SMTP destinée à: "MSISDN/TYPE=PLMN@domain_destinataire", où « domain_destinataire » est un nom de domaine correspondant à un opérateur mobile, ledit relais MMS récupère directement l'adresse du MMSC de l'opérateur destinataire en utilisant une requête DNS.

**5.** Système de routage selon la revendication 1, dans lequel le relais MMS dispose d'une table de correspondance entre les noms de domaine de ses clients et une adresse IP de leur centre de messagerie MMS (MMSC).

**6.** Système de routage selon la revendication 5, **caractérisé en ce que** le relais MMS met en oeuvre le mécanisme suivant :
- lorsque le relais MMS reçoit une requête SMTP destinée à: "MSISDN/TYPE=PLMN@domainMMS_Relay", où « domainMMS_Relay » est un nom de domaine correspondant au relais MMS, ledit relais MMS construit une requête MAP vers le HLR du destinataire pour récupérer l'IMSI, l'associer au FQDN et récupérer le nom de domaine du destinataire, ce dernier étant destiné à retrouver l'adresse du MMSC de l'opérateur destinataire en utilisant ladite table de correspondance,
- lorsque le relais reçoit une requête SMTP destinée à: "MSISDN/TYPE=PLMN@domain_destinataire", où « domain_destinataire » est un nom de domaine correspondant à un opérateur mobile, ledit relais MMS récupère directement l'adresse du MMSC de l'opérateur destinataire en utilisant ladite table de correspondance.
